# EUROPÄISCHE PATENTSCHRIFT

(11) **EP 0 903 494 B1**
(45) Veröffentlichungstag und Bekanntmachung des Hinweises auf die Patenterteilung: **18.08.2004**
(21) Anmeldenummer: 98107275.4
(22) Anmeldetag: 21.04.1998
(51) Int. Cl.: F04B 9/04

(54) **Hydraulikpumpe**
Hydraulic pump
Pompe hydraulique

(30) Priorität: 23.09.1997 DE 29717022 U
(43) Veröffentlichungstag der Anmeldung: 24.03.1999
(73) Patentinhaber: HAWE Hydraulik GmbH & Co. KG, 81673 München (DE)
(72) Erfinder: Brunner, Rudolf Obering., 85598 Baldham (DE); Neumair, Georg, 85402 Thalhausen (DE); Lörner, Gerhard, 85386 Eching (DE)
(74) Vertreter: Grünecker, Kinkeldey, Stockmair & Schwanhäusser Anwaltssozietät

(56) Entgegenhaltungen:
- DE-A- 1 528 407
- DE-A- 4 107 952
- FR-A- 895 694
- GB-A- 689 587

## Beschreibung

Die Erfindung betrifft eine Hydraulikpumpe der im Oberbegriff des Patentanspruchs 1 angegebenen Art.

Derartige Hydraulikpumpen werden im Maschinenbau, beispielsweise Werkzeugmaschinenbau, in großem Umfang verwendet und sind je nach Leistungsbedarf bzw. gewünschter Fördermenge mit einem oder mehreren Pumpenelementen ausgestattet, die von einer Antriebswelle angetrieben werden. Die Hubbewegung des Kolbens wird von der exzentrischen Umlaufbewegung des Exzenters der Antriebswelle abgeleitet, wobei der Exzenter den Kolben nicht direkt beaufschlagt, sondern unter Zwischenschaltung eines auf dem Exzenter drehbaren Lagerrings. Der Lagerring ist zweckmäßig, weil beim Arbeiten des Kolbens punktweise auftretende Kräfte entstehen, die in Umfangsrichtung des Exzenters wandern und deshalb zu relativ hohen, ungleichförmigen Belastungen führen, die den Lagerring kompensiert.

Bei in der Praxis bekannten Hydraulikpumpen dieser Art ist der Lagerring mittels zweier, eine Axialführung bewirkender Wälzlager auf dem Exzenter drehgelagert. Wälzlager beanspruchen in radialer Richtung viel Bauraum und haben den Nachteil einer relativ kurzen Lebensdauer im Vergleich zu Gleitlagern. Es ist deshalb üblich, zwischen dem Lagerring und dem Exzenter ein Exzenter-Gleitlager mit einer Gleitlager-Buchse vorzusehen. Da jedoch eine relative Drehbewegung zwischen der Lagerbuchse und dem Lagerring bzw. eine axiale Versetzung der Lagerbuchse relativ zum Lagerring Verschleiß bzw. Schäden bewirken, wird die Lagerbuchse in den Lagerring eingeklebt. Aufgrund der punktweisen und umlaufenden Kräfte, die auf die Klebeverbindung einwirken, kann sich die Klebeverbindung lösen und die vorerwähnten Schäden oder Verschleißerscheinungen zulassen, die die an sich wesentlich längere Lebensdauer des Exzenter-Gleitlagers gegenüber Wälzlagern nicht zum Tragen kommen lassen.

Bei einer aus DE-A-41 07 952 bekannten Kolbenpumpe hat der Lagerring einen polygonen Außenumfang, mit dem er die Kolben beaufschlagt. Zwischen dem Wellenexzenter und dem Lagerring ist eine Gleitlagerbuchse aus Lagermaterial vorgesehen, die mit dem Lagerring ohne formschlüssige Mittel fest verbunden ist.

Aus FR-895 694 A ist es für eine Gleitlagerbuchse aus einer äußeren Stahlhülse und einer Innenbuchse aus Lagermetall bekannt, zum Festlegen der Innenbuchse deren äußere Längsrippen in Längsnuten der Stahlhülse einzubringen. Die Längsrippen und die Längsnuten erstrecken sich über die gesamte Gleitlagerbuchsen-Länge. Zusätzlich kann ein Stirnende der Lagerbuchse entlang der gesamten Umfangserstreckung nach außen aufgeweitet sein, und entweder in eine konische umlaufende Aufweitung des Stirnendes der Bohrung der Stahlhülse eingreifen, oder sogar am Ringflansch-Stimende der Stahlhülse stumpf anliegen.

Weiterer Stand der Technik ist enthalten GB-A-689 587 und DE-A-15 28 407.

Der Erfindung liegt die Aufgabe zugrunde, eine Hydraulikpumpe der eingangs genannten Art zu schaffen, bei der die lange Standzeit des Exzenter-Gleitlagers zuverlässig nutzbar ist.

Die gestellte Aufgabe wird mit den Merkmalen des Anspruchs 1 gelöst.

Durch die formschlüssige Verdreh- und Axialsicherung der Lagerbuchse im Lagerring wird trotz der hohen, punktweisen und wandernden Kräfte, die zwischen dem Lagerring und der Lagerbuchse übertragen werden, die lange Standzeit des Gleitlagers zuverlässig nutzbar. Denn die lokalen formschlüssigen Sicherungen können sich über die Lebensdauer des Gleitlagers nicht lösen. Die Lagerbuchse bleibt über ihre Lebensdauer mit dem Lagerring verbunden. Die Anschlagmittel sind herstellungstechnisch einfache lokale Aufbiegungen und Aufnahmevertiefungen für die Aufbiegungen. Jede Aufbiegung läßt sich so positionieren, daß möglichst wenig nutzbare Lagerfläche vergeudet wird. Dabei bilden die Aufnahmevertiefung und die Aufbiegung gemeinsam eine Verdreh- und eine Axialsicherung. Aufgrund dieser Zweifachfunktion wird nur eine Aufbiegung bzw. Aufnahmevertiefung für beide Sicherungsrichtungen benötigt.

Gemäß Anspruch 2 wird günstig wenig Lagerfläche der Lagerbuchse vergeudet, weil die Aufbiegung nur einen sehr kleinen Teil der Lagerfläche beansprucht. Sofern an beiden Stirnenden der Lagerbuchse jeweils mindestens eine Aufbiegung vorgesehen ist, kooperieren beide Aufbiegungen hinsichtlich der Axialsicherung in beiden axialen Richtungen. Die Aufgabe der Drehsicherung könnte eine Aufbiegung allein übernehmen. Zweckmäßigerweise teilen sich beide Aufbiegungen jedoch die Aufgabe der Drehsicherung.

Gemäß Anspruch 3 sind die Aufbiegungen in Umfangsrichtung gleichförmig verteilt, wobei zur Axialsicherung die Aufbiegungen an einem Stirnende mit den Aufbiegungen am anderen Stirnende kooperieren.

Gemäß Anspruch 4 erfüllt die Aufnahmevertiefung eine zusätzliche Aufgabe, weil sie das Eindringen von Öl in den Lagerbereich erleichtert, was für eine lange Standzeit des Gleitlagers zweckmäßig ist.

Gemäß Anspruch 5 wird durch einen harmonischen Verlauf der Aufbiegungen eine Beeinträchtigung der Lagereigenschaften, z.B. durch Kerbspannungen, des Gleitlagers vermieden.

Da die Seitenwangen, die üblicherweise zur Führung des Lagerrings vorgesehen sind, an sich den Zutritt von Schmieröl zum Gleitlager oder das Ausschwemmen von Verunreinigungen behindern oder erschweren, ist es gemäß Anspruch 6 und 7 zweckmäßig, die zur Verdreh- und Axialsicherung vorgesehenen Anschlagmittel so auszubilden, daß sie trotz der Seitenwangen für eine lange Standzeit des Gleitlagers durchgängige Ölkanäle definieren.

Anhand der Zeichnung wird eine Ausführungsform des Erfindungsgegenstandes erläutert. Es zeigen:
- Fig. 1: einen Axialschnitt einer Hydraulikpumpe, und
- Fig. 2: ein Detail aus Fig. 1 in einem Axialschnitt.

Eine Hydraulikpumpe B enthält in einem Gehäuse ein eine Antriebswelle 2, die mindestens einen Exzenter E aufweist. Der Exzenter E ist entweder einstückig mit der Antriebswelle 2 ausgebildet, oder auf dieser angeordnet und drehgesichert. Die Antreibswelle 2 ist z.B. in Gleitlagern 22 und Gehäuseringen 3 drehgelagert und axial positioniert. Auf der Antriebswelle 2 sitzende Seitenwangen 4, z.B. gehärtete Kreisringscheiben, sind beiderseits des Exzenters E vorgesehen und dienen zur Führung eines auf dem Exzenter E drehbaren Lagerrings R. Für den Lagerring R ist eine Gleitlagerung G auf dem Exzenter E vorgesehen, nämlich eine zwischen den Innenumfang 6 des Lagerrings R und dem Außenumfang 5 des Exzenters E angeordnete zylindrische Lagerbuchse B aus Lagermetall (gegebenenfalls eine Kombination von Metall und Kunststoff).

Im Gehäuse 1 ist wenigstens ein Kolben-Pumpenelement derart gelagert, daß sein Kolben 11 auf eine Umfangsfläche 10 des Lagerrings R ausgerichtet ist. Der Kolben 11 wird durch eine Rückstellfeder 12 beaufschlagt und arbeitet in einem Zylinder 13 in etwa radial zur Achse der Antriebswelle 2. In Umfangsrichtung können mehrere derartige Axialkolben-Pumpenelemente verteilt im Gehäuse 1 angeordnet sein, die vom selben Exzenter E angetrieben werden. Es ist aber auch denkbar, auf der Antriebswelle 2 mehrere Exzenter E vorzusehen und mit diesen Exzentern mehrere axial verteilte Pumpenelemente bzw. Pumpenelement-Gruppen anzutreiben.

In der Gleitlagerung G ist die Lagerbuchse B in den Innenumfang 6 des Lagerrings R eingepreßt und zusätzlich formschlüssig gegen Verdrehen und in axialer Richtung gesichert. Für diese Aufgabe dienen lokal ineinandergreifende Anschlagmittel A1 und A2, die, z.B. einstückig, in die Lagerbuchse B bzw. den Lagerring R eingeformt sind.

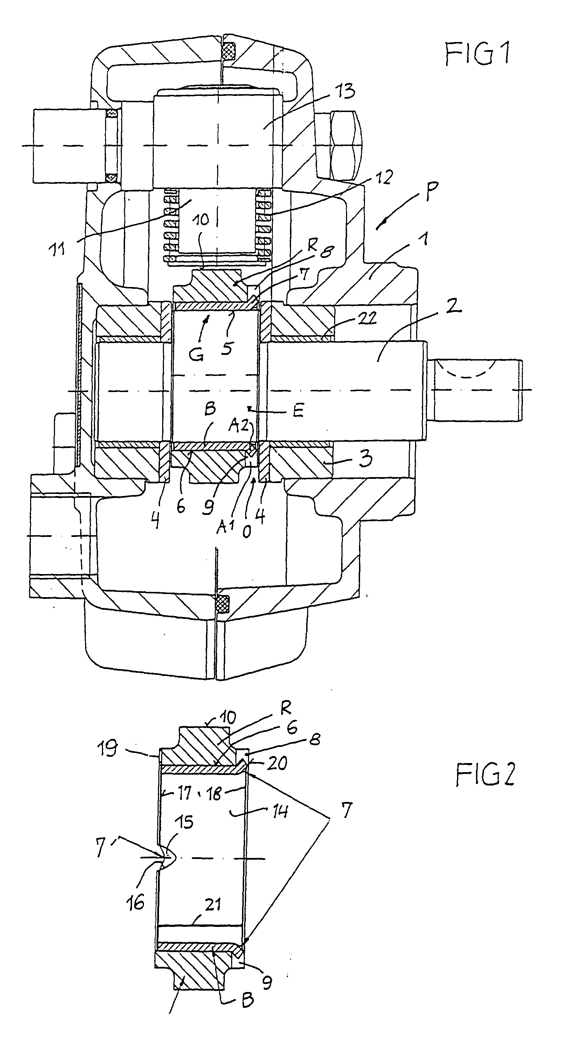

Die Anschlagmittel A1 des Lagerrings R sind nach innen offene Aufnahmen 8, in die jeweils eine nach außen gerichtete Aufbiegung 7 der Lagerbuchse B formschlüssig eingreift. Zweckmäßigerweise sind die Aufnahmen 8 nach außen durchgängige Öffnungen (nicht gezeigt), oder (wie gezeigt) zu den Stirnenden 19, 20 (Fig. 2) des Lagerrings R offene, in etwa radiale Nuten 9.

Gemäß Fig. 1 bilden die Anschlagmittel A1, A2, d.h. die jeweilige Aufbiegung 7 und ihre Aufnahme 8 bzw. die Öffnung 9, einen bis zum Exzenter E durchgängigen Ölkanal O, dem entlang im Gehäuse vorhandenes Hydraulikmedium bzw. Öl in das Gleitlager G gelangen kann.

Gemäß Fig. 2 ist an jedem Stirnende 17, 18 der Lagerbuchse B, die axial geringfügig kürzer ist als der Innenumfang 6 des Lagerrings, jeweils eine Aufbiegung 7 vorgesehen, der eine Aufnahme 8 im Lagerring R zugeordnet ist. Zweckmäßigerweise sind sogar in Umfangsrichtung verteilt, zweckmäßigerweise diametral gegenüberliegend, zwei Aufbiegungen 7 pro Stirnende 17, 18 vorgesehen. Die Aufbiegungen 7 an einem Stirnende sind gegenüber den Aufbiegungen 7 am anderen Stirnende in Umfangsrichtung versetzt, zweckmäßigerweise um ca. 90°. Jede Aufbiegung 7 hat einen annähernd trichterförmigen Verlauf 15, ausgehend von der Lagerfläche 14 der Lagerbuchse B. Zwischen der Lagerfläche 14 und dem Außenumfang 5 des Exzenters E findet die Drehbewegung statt, während die Lagerbuchse B im Lagerring R unverdrehbar und axial festgelegt sitzt.

Jede Aufbiegung 7 bildet in der Kontur des Stirnendes 17 bzw. 18 eine Mulde 16, die im Verlauf des Ölkanals O den Zutritt des Öls nach innen und das Ausschwemmen von Verunreinigungen begünstigt. Die Ölkanäle A werden begrenzt durch die Aufnahmen 8, die Aufbiegungen 7 und die Seitenwangen 4. Die Seitenwangen 4 erstrekken sich nach außen bis zu oder über die Stirnenden 19, 20 des Lagerrings R.

Aus Kostengründen kann die Lagerbuchse B, die aus einem Streifen geformt ist, einen Stoß 21 aufweisen. Der Stoß 21 sollte zweckmäßigerweise gegenüber den Aufbiegungen 7 in Umfangsrichtung versetzt sein. Es wäre auch möglich, eine oder mehrere Aufbiegungen im Bereich des Stoßes 21 vorzusehen. Aufbiegungen an den Stirnenden wird jedoch der Vorzug gegeben. Die Aufbiegungen 7 werden z.B. erst nach dem Einpressen der Lagerbuchse in den Lagerring R gepreßt. Es wäre jedoch denkbar, zumindest die Aufbiegungen an einem Stirnende schon vorzuformen und nur die Aufbiegungen am gegenüberliegenden Stirnende nach dem Einpressen zu formen.

## Patentansprüche

1. Hydraulikpumpe (P) mit mindestens einem Kolben-Pumpenelement, dessen Kolben (11) auf einen Exzenter (E) einer Antriebswelle (2) ausgerichtet ist, und mit einem eine in einem Lagerring (R) festgelegte Lagerbuchse (B) aufweisenden Exzenter-Gleitlager (G) zwischen dem Exzenter (E) und dem auf dem Exzenter (E) drehbaren Lagerring (R), **dadurch gekennzeichnet, dass** die Lagerbuchse (B) und der Lagerring (R) jeweils in die Stirnenden eingeformte und nur lokal ineinandergreifende Anschlagmittel (A1, A2) in Form wenigstens einer nach außen gerichteten, lokalen Aufbiegung (7) am Stirnende (17, 18) der Lagerbuchse (B) und jeweils einer nach innen offenen lokalen Aufnahmevertiefung (8) im Stimende des Lagerrings (R) aufweisen, die gleichzeitig Verdreh- und Axialsicherungen für die Lagerbuchse (B) im Lagerring (R) bilden.

2. Hydraulikpumpe nach Anspruch 1, **dadurch gekennzeichnet, dass** die Anschlagmittel an jedem Stirnende (17, 18) der Lagerbuchse (B) und des Lagerrings (R), vorzugsweise versetzt zu einem Stoßbereich (21) der Lagerbuchse (B), vorgesehen sind.

3. Hydraulikpumpe nach Anspruch 2, **dadurch gekennzeichnet, dass** die Aufbiegung (7) bzw. die Aufnahmevertiefung (8) an einem Stirnende in Umfangsrichtung gegenüber der Aufbiegung bzw. Aufnahmevertiefung an dem anderen Stirnende in Umfangsrichtung versetzt sind, vorzugsweise um etwa 90°.

4. Hydraulikpumpe nach Anspruch 1, **dadurch gekennzeichnet, dass** die Aufnahmevertiefung (8) des Lagerrings (R) eine bis zum Außenumfang des Lagerrings durchgängige, zum Stirnende (19, 20) des Lagerringes (R) offene, annähernd radial verlaufende Nut (9) ist.

5. Hydraulikpumpe nach Anspruch 1, **dadurch gekennzeichnet, dass** sich die Aufbiegung (7) ausgehend von der innenliegenden Lagerfläche (14) der Lagerbuchse (B) in Richtung zum Stirnende (17, 18) annähernd trichterförmig erweitert.

6. Hydraulikpumpe nach Anspruch 1, **dadurch gekennzeichnet, dass** die Aufbiegung (7) in der Kontur des Stirnendes (17, 18) der Lagerbuchse (B) eine Öldurchgangs-Mulde (16) bildet.

7. Hydraulikpumpe nach wenigstens einem der vorhergehenden Ansprüche, **dadurch gekennzeichnet, dass** auf der Antriebswelle (2) beiderseits des Exzenters (E) an den Stirnenden (19, 20) des Lagerrings (R) nach außen greifende Seitenwangen (4), z.B. in Form gehärterter Kreisringscheiben, vorgesehen sind, und dass die Aufnahmevertiefung (8) und die Aufbiegung (7) mit jeweils einer Seitenwange (4) einen von außen bis zum Exzenter (E) durchgängigen Ölkanal (O) begrenzen.

## Claims

1. Hydraulic pump (P), with at least one piston-pump element, the piston (11) of which is aligned with an eccentric (E) of a driveshaft (2), and with an eccentric plain bearing (G), having a bearing bush (B) secured in a bearing ring (R), between the eccentric (E) and the bearing ring (R) rotatable on the eccentric (E), **characterized in that** the bearing bush (B) and the bearing ring (R) have in each case stop means (A1, A2) integrally formed into the end faces and intermeshing only locally, in the form of at least one outwardly directed local bent-up portion (7) on the end face (17, 18) of the bearing bush (B) and in each case of an inwardly open local receiving depression (8) in the end face of the bearing ring (R), the said bent-up portion and the said receiving depression at the same time forming devices for securing the bearing bush (B) in the bearing ring (R) against twisting and in the axial direction.

2. Hydraulic pump according to Claim 1, **characterized in that** the stop means on each end face (17, 18) of the bearing bush (B) and of the bearing ring (R) are preferably provided so as to be offset to an adjoining region (21) of the bearing bush (B).

3. Hydraulic pump according to Claim 2, **characterized in that** the bent-up portion (7) and the receiving depression (8) on one end face are offset, preferably by about 90°, in the circumferential direction with respect to the bent-up portion and the receiving depression on the other end face.

4. Hydraulic pump according to Claim 1, **characterized in that** the receiving depression (8) of the bearing ring (R) is an approximately radially running groove (9) continuous as far as the outer circumference of the bearing ring and open to the end face (19, 20) of the bearing ring (R).

5. Hydraulic pump according to Claim 1, **characterized in that** the bent-up portion (7), starting from the inner bearing surface (14) of the bearing bush (B), widens approximately in a funnel-shaped manner in the direction of the end face (17, 18).

6. Hydraulic pump according to Claim 1, **characterized in that** the bent-up portion (7) forms, in the contour of the end face (17, 18) of the bearing bush (B), an oil passage recess (16).

7. Hydraulic pump according to at least one of the preceding claims, **characterized in that** side sheets (4), for example in the form of hardened annular discs, extending outwards on the end faces (19, 20) of the bearing ring (R) are provided on the drive shaft (2) on both sides of the eccentric (E), and **in that** the receiving depression (8) and the bent-up portion (7) delimit, in each case with a side sheet (4), an oil duct (O) continuous from outside as far as the eccentric (E).

## Revendications

1. Pompe hydraulique (P) comprenant au moins un élément de pompe à piston, dont le piston (11) est orienté sur un excentrique (E) d'un arbre moteur (2), et un palier lisse d'excentrique (G), qui présente un coussinet (B) fixé dans un anneau de palier (R), entre l'excentrique (E) et l'anneau de palier (R) tournant sur l'excentrique (E), **caractérisée en ce que** le coussinet (B) et l'anneau de palier (R) présentent respectivement des moyens de butée (A1, A2), conformés dans les extrémités frontales et ne s'emboîtant que localement, sous forme d'au moins un rabat local (7), dirigé vers l'extérieur, sur l'extrémité frontale (17, 18) du coussinet (B), et respectivement d'un creux de réception (8) local ouvert vers l'intérieur dans l'extrémité frontale de l'anneau de palier (R), qui forment simultanément des blocages de rotation et axiaux pour le coussinet (B) dans l'anneau de palier (R).

2. Pompe hydraulique suivant la revendication 1, **caractérisée en ce que** les moyens de butée sont prévus sur chaque extrémité frontale (17, 18) du coussinet (B) et de l'anneau de palier (R), de préférence en déport par rapport à une zone d'about (21) du coussinet (B).

3. Pompe hydraulique suivant la revendication 2, **caractérisée en ce que** le rabat (7) et le creux de réception (8) sur une extrémité frontale sont déportés dans la direction périphérique par rapport au rabat et au creux de réception sur l'autre extrémité frontale, de préférence d'environ 90°.

4. Pompe hydraulique suivant la revendication 1, **caractérisée en ce que** le creux de réception (8) de l'anneau de palier (R) est une rainure (9) s'étendant à peu près dans la direction radiale, continue jusqu'au pourtour extérieur de l'anneau de palier, ouverte en direction de l'extrémité frontale (19, 20) de l'anneau de palier (R).

5. Pompe hydraulique suivant la revendication 1, **caractérisée en ce que** le rabat (7) s'élargit à peu près en forme d'entonnoir à partir de la portée intérieure (14) du coussinet (B) en direction de l'extrémité frontale (17, 18).

6. Pompe hydraulique suivant la revendication 1, **caractérisée en ce que** le rabat (7) forme une auge de passage d'huile (16) dans le contour de l'extrémité frontale (17, 18) du coussinet (B).

7. Pompe hydraulique suivant l'une au moins des revendications précédentes, **caractérisée en ce que** des joues latérales (4) s'étendant vers l'extérieur, par exemple sous forme de disques en anneau de cercle trempés, sont prévues sur l'arbre moteur (2) de part et d'autre de l'excentrique (E) sur les extrémités frontales (19, 20) de l'anneau de palier (R), et que le creux de réception (8) et le rabat (7) délimitent à chaque fois avec une joue latérale (4) un canal d'huile (O) continu de l'extérieur jusqu'à excentrique (E).
